# EUROPEAN PATENT APPLICATION

(11) **EP 2 314 966 A2**
(43) Date of publication of application: **27.04.2011**
(21) Application number: 09762669.1
(22) Date of filing: 10.06.2009
(51) Int. Cl.: F28D 1/00, F28F 1/02, B60H 1/32

(54) **VEHICLE AIR-CONDITIONING SYSTEM EMPLOYING TUBE-FIN-TYPE EVAPORATOR USING HFO 1234YF MATERIAL REFRIGERANT**

(30) Priority: 10.06.2008 KR 20080054190; 10.06.2009 KR 20090051426; 10.06.2009 KR 20090051436
(71) Applicant: Halla Climate Control Corporation, Daejeon-si 306-230 (KR)
(72) Inventor: LIM, Hong-Young, Daejeon 306-230 (KR); JEON, Young-Ha, Daejeon 306-230 (KR); OH, Kwang Hun, Daejeon 306-230 (KR); PARK, Chang Ho, Daejeon 306-230 (KR); JEE, Yong Jun, Daejeon 306-230 (KR)
(74) Representative: Herrmann, Uwe
(86) International application number: PCT/KR2009/003127
(87) International publication number: WO 2009/151282

(57) **Abstract**

Provided is an air conditioning system with a tube-fin type evaporator which obtains optimal performance The air conditioning system with the tube-fin type evaporator using HFO 1234yf refrigerant, which has totally different physical properties from conventional refrigerant containing R-134, CO₂ or the like, has an optimal design corresponding to a physical property of the used refrigerant.

## Description

### CROSS-REFERENCE(S) TO RELATED APPLICATIONS

The present invention claims priority of Korean Patent Application No. 10-2008-, filed on Month 00, 2008, which is incorporated herein by reference.

### BACKGROUND OF THE INVENTION

### Field of the Invention

The present invention relates to a tube-fin type evaporator using HFO 1234yf refrigerant; and, more particularly, to an air conditioning system with a tube-fin type evaporator which obtains optimal performance when using HFO 1234yf refrigerant having entirely different physical properties from conventional refrigerant.

### Description of Related Art

Recently, according to the rise of environmental issues, use of materials detrimental to the environment are prohibited or restricted. Especially, in case of refrigerant which is essentially used in an air conditioning and cooling system, for example, since CFC-based refrigerant containing chlorine destroys the earth's ozone layer, restrictions on its use are being spread.

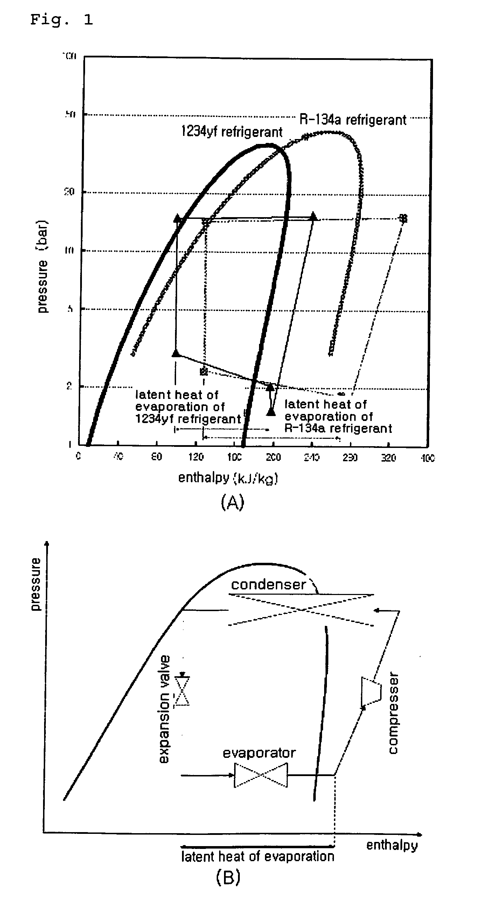

A typical cooling system includes an evaporator which absorbs heat from the surrounding area, a compressor which compresses refrigerant, a condenser which radiates heat into the surrounding area, and an expansion valve which expands the refrigerant. In the cooling system, the gaseous refrigerant introduced from the evaporator into the compressor is compressed to high temperature and high pressure by the compressor. While the compressed gaseous refrigerant is liquefied by passing through the condenser, heat of liquefaction is radiated to the surrounding area. The liquefied refrigerant is changed into wet vapor having low temperature and low pressure by passing through the expansion valve. Then, the wet vapor is introduced again into the evaporator and vaporized by absorbing heat of vaporization from the surrounding area, thereby cooling the surrounding air. These processes form a cooling cycle. Fig. 1B schematically shows a p-h diagram of a conventional air conditioning system.

In the cooling system, the refrigerant functions to actually transfer the heat. Therefore, the refrigerant should have excellent heat transfer characteristic. In case of the conventional CFC-based refrigerant and the like, it has the excellent heat transfer characteristic, but since it has a harmful effect on the environment, its use is restricted. Thus, considerable research and development is being conducted on new refrigerant which can be substituted with the conventional one. In order to replace the conventional refrigerant, the new refrigerant should have environment friendly characteristic as well as heat transfer characteristic, chemical stability, non-inflammability, compatibility with a lubricant and the like which are equal to or more excellent than the conventional one.

In Korean Laid-Open Publication No.2007-0004654 (entitled "Compositions containing fluorine substituted olefins"), there is disclosed new excellent refrigerant which can replace the conventional one. Hereinafter, one of refrigerants described in the prior art, which contains HFO-1234yf, is called "1234yf refrigerant". The term "HFO-1234yf" is used herein to refer to all tetrafluoropropenes. The tetrafluoropropene includes HFO 1234yf and both cis- and trans-1,1,1,3-tetrafluoropropene (HFO-1234ze). HFO-1234 compounds are known materials and listed in Chemical Abstracts databases. In U.S. Patent Nos. 2,889,379; 4,798,818 and 4,465,786, there is disclosed the production of fluoropropenes such as CF₃CH=CH₂ by catalytic vapor phase fluorination of various saturated and unsaturated halogen containing C₃ compounds. Further, in European Patent No.974,571, there is disclosed the preparation of 1,1,1,3-tetrafluoropropene by contacting 1,1,1,3-pentafluoropropene (HFC-245fa) in the vapor phase with a chromium-based catalyst at elevated temperature, or in the liquid phase with an alcoholic solution of KOH, NaOH, Ca(OH)₂ or Mg(OH)₂.

Fig. 1A schematically shows p-h diagrams of R-134a refrigerant and 1234yf refrigerant as representative conventional refrigerants. As shown in the drawing, the p-h diagrams of R-134a refrigerant and 1234yf refrigerant are different from each other. More detailedly, operation pressure/operation temperature in an air conditioning system and physical properties of the 1234yf refrigerant are similar to those of the conventional R-134a refrigerant. However, latent heat of evaporation of the 1234yf refrigerant is 30% less than that of the R-134a refrigerant, and thus, in order for the 1234yf refrigerant to have the same heat radiation performance as the R-134a refrigerant, much more flow rate of the 123yf refrigerant is needed.

In a conventional evaporator using the R-134a refrigerant and the like, various studies have been conducted to optimize performance of the evaporator, such as heat exchange rate and pressure drop. However, since the physical properties of the 1234yf refrigerant are very different from those of the conventional refrigerant, new design considerations for an evaporator using the 1234yf refrigerant, which are totally different from those for the conventional evaporator, are needed in order to provide the equal performance with the conventional evaporator. Actually, in case that the 1234yf refrigerant is used in the same evaporator as that using the R-134a refrigerant, it is necessary to increase the flow rate in order to obtain the same heat radiation performance. In this case, the pressure drop of the refrigerant occurs excessively in the whole air conditioning system as well as the evaporator due to the increased flow rate, and thus the performance of the air conditioning system is considerably deteriorated.

In other words, even though the 1234yf refrigerant is an environment friendly material compared to the R-134a refrigerant, there is a problem that the performance of the air conditioning system using the 1234yf refrigerant is lower than that using the R-134a refrigerants. In order to solve the problem, considerable research and development is required. Meanwhile, it is possible to selectively optimize various parameters in the air conditioning system so as to overcome the different in performance. When considering a problem of cost increases with a change in the system, it is preferable to improve the performance without massive design change. The present invention intends to optimize a dimension range of each construction element of the evaporator and thus improve the performance without the massive design change.

### SUMMARY OF THE INVENTION

An embodiment of the present invention is directed to providing an air conditioning system with a tube-fin type evaporator using HFO 1234yf refrigerant having totally different physical properties from conventional refrigerant containing R-134, CO₂ or the like, which has an optimal design corresponding to a physical property of the used refrigerant.

To achieve the object of the present invention, the present invention provides an air conditioning system with a tube-fin type evaporator using HFO 1234yf refrigerant, including a compressor; a condenser; and an expansion valve, wherein the tube-fin type evaporator 100 includes a plurality of tubes 20 which are arranged in parallel along an air-blowing direction to be spaced apart from each other at regular intervals; a fin 30 which is interposed between the tubes 20 so as to increase a heat exchange surface area with respect to air flowing between the tubes 20; a pair of header-tanks 10 which are coupled to both ends of the tube 20 so that a heat exchange medium is flowed therethrough; and at least one or more baffle 40 which are provided at the header-tank 10, and the heat exchange medium is refrigerant containing HFO 1234yf, and the tube has a height Hₜ of 2.489~4.082mm, and a flow of the heat exchange medium is divided into four passes. More preferably, the tube has a height Hₜ of 2.875~3.711mm.

Further, the present invention provides an air conditioning system with a tube-fin type evaporator using HFO 1234yf refrigerant, including a compressor; a condenser; and an expansion valve, wherein the tube-fin type evaporator 100 includes a plurality of tubes 20 which are arranged in parallel along an air-blowing direction to be spaced apart from each other at regular intervals; a fin 30 which is interposed between the tubes 20 so as to increase a heat exchange surface area with respect to air flowing between the tubes 20; a pair of header-tanks 10 which are coupled to both ends of the tube 20 so that a heat exchange medium is flowed therethrough; and at least one or more baffle 40 which are provided at the header-tank 10, and the heat exchange medium is refrigerant containing HFO 1234yf, and the tube has a hydraulic diameter Dₜ of 0.780~1.839mm, and a flow of the heat exchange medium is divided into four passes. More preferably, the tube has a hydraulic diameter Dₜ of 0.946~1.775mm.

Further, the present invention provides an air conditioning system with a tube-fin type evaporator using HFO 1234yf refrigerant, including a compressor; a condenser; and an expansion valve, wherein the tube-fin type evaporator 100 includes a plurality of tubes 20 which are arranged in parallel along an air-blowing direction to be spaced apart from each other at regular intervals; a fin 30 which is interposed between the tubes 20 so as to increase a heat exchange surface area with respect to air flowing between the tubes 20; a pair of header-tanks 10 which are coupled to both ends of the tube 20 so that a heat exchange medium is flowed therethrough; and at least one or more baffle 40 which are provided at the header-tank 10, and the heat exchange medium is refrigerant containing HFO 1234yf, and FPDM(Fins Per DeciMeter) indicating the number of threads or grooves of the fin per 1decimeter has a value of 63.439-88.897, and a flow of the heat exchange medium is divided into four passes. More preferably, the FPDM has a value of 65.190-88.897.

Preferably, the evaporator 100 is provided with first to fourth tube groups ①-4 to ④-4 which are formed in a status that the baffle provided at upper and lower tanks of first and second rows is interposed among them, and the heat exchange medium passes, in turn, through the first to fourth tube groups ①-4 to ④-4.

Further, the present invention provides the present invention provides an air conditioning system with a tube-fin type evaporator using HFO 1234yf refrigerant, including a compressor; a condenser; and an expansion valve, wherein the tube-fin type evaporator 100 includes a plurality of tubes 20 which are arranged in parallel along an air-blowing direction to be spaced apart from each other at regular intervals; a fin 30 which is interposed between the tubes 20 so as to increase a heat exchange surface area with respect to air flowing between the tubes 20; a pair of header-tanks 10 which are coupled to both ends of the tube 20 so that a heat exchange medium is flowed therethrough; and at least one or more baffle 40 which are provided at the header-tank 10, and the heat exchange medium is refrigerant containing HFO 1234yf, and the tube has a height Hₜ of 1.921~3.371mm, and a flow of the heat exchange medium is divided into six passes. More preferably, the tube has a height Hₜ of 2.280~3.216mm.

Further, the present invention provides the present invention provides an air conditioning system with a tube-fin type evaporator using HFO 1234yf refrigerant, including a compressor; a condenser; and an expansion valve, wherein the tube-fin type evaporator 100 includes a plurality of tubes 20 which are arranged in parallel along an air-blowing direction to be spaced apart from each other at regular intervals; a fin 30 which is interposed between the tubes 20 so as to increase a heat exchange surface area with respect to air flowing between the tubes 20; a pair of header-tanks 10 which are coupled to both ends of the tube 20 so that a heat exchange medium is flowed therethrough; and at least one or more baffle 40 which are provided at the header-tank 10, and the heat exchange medium is refrigerant containing HFO 1234yf, and the tube has a hydraulic diameter Dₜ of 1.857~3.228mm, and a flow of the heat exchange medium is divided into six passes. More preferably, the tube has a hydraulic diameter Dₜ of 2.146~3.008mm.

Further, the present invention provides the present invention provides an air conditioning system with a tube-fin type evaporator using HFO 1234yf refrigerant, including a compressor; a condenser; and an expansion valve, wherein the tube-fin type evaporator 100 includes a plurality of tubes 20 which are arranged in parallel along an air-blowing direction to be spaced apart from each other at regular intervals; a fin 30 which is interposed between the tubes 20 so as to increase a heat exchange surface area with respect to air flowing between the tubes 20; a pair of header-tanks 10 which are coupled to both ends of the tube 20 so that a heat exchange medium is flowed therethrough; and at least one or more baffle 40 which are provided at the header-tank 10, and the heat exchange medium is refrigerant containing HFO 1234yf, and FPDM(Fins Per DeciMeter) indicating the number of threads or grooves of the fin per 1decimeter has a value of 48.718-79.211, and a flow of the heat exchange medium is divided into six passes. More preferably, the FPDM has a value of 55.294-79.211.

Preferably, the evaporator 100 is provided with first to sixth tube groups ①-6 to ⑥-6 which are formed in a status that the baffle provided at upper and lower tanks of first and second rows is interposed among them, and the heat exchange medium passes, in turn, through the first to sixth tube groups ①-6 to ⑥-6.

### BRIEF DESCRIPTION OF THE DRAWINGS

Fig. 1 is a p-h diagram of each of R-134a refrigerant and HFO 1234yf refrigerant.

Fig. 2 is a perspective view of a tube-fin type evaporator.

Fig. 3 is a schematic view showing a flow of refrigerant in the tube-fin type evaporator.

Fig. 4 is an enlarged view of each part of the tube-fin type evaporator.

Fig. 5 is a relation graph of a height Ht of a tube, and a heat radiation performance and a pressure drop of refrigerant in a four pass evaporator.

Fig. 6 is a relation graph of a hydraulic diameter Dₜ of a tube, and a heat radiation performance and a pressure drop of refrigerant.

Fig. 7 is a relation graph of FPDM, and a heat radiation performance and a pressure drop of air in the four pass evaporator.

Fig. 8 is a relation graph of a height Hₜ of a tube, and a heat radiation performance and a pressure drop of refrigerant in a six pass evaporator.

Fig. 9 is a relation graph of a hydraulic diameter Dₜ of a tube, and a heat radiation performance and a pressure drop of refrigerant in the six pass evaporator.

Fig. 10 is a relation graph of FPDM, and a heat radiation performance and a pressure drop of air in the six pass evaporator.

Fig. 11 is a relation graph of performance (temperature of discharged air) of an air conditioning system and heat radiation performance of a single part according to a kind of core.

Fig. 12 is a relation graph of performance (temperature of discharged air) of an air conditioning system and a pressure drop of refrigerant of a single part according to a kind of core.

### [Detailed Description of Main Elements]

| | |
|---|---|
| 100: evaporator | 10: header tank |
| 20: tube | 30: fin |

### DESCRIPTION OF SPECIFIC EMBODIMENTS

The advantages, features and aspects of the invention will become apparent from the following description of the embodiments with reference to the accompanying drawings, which is set forth hereinafter.

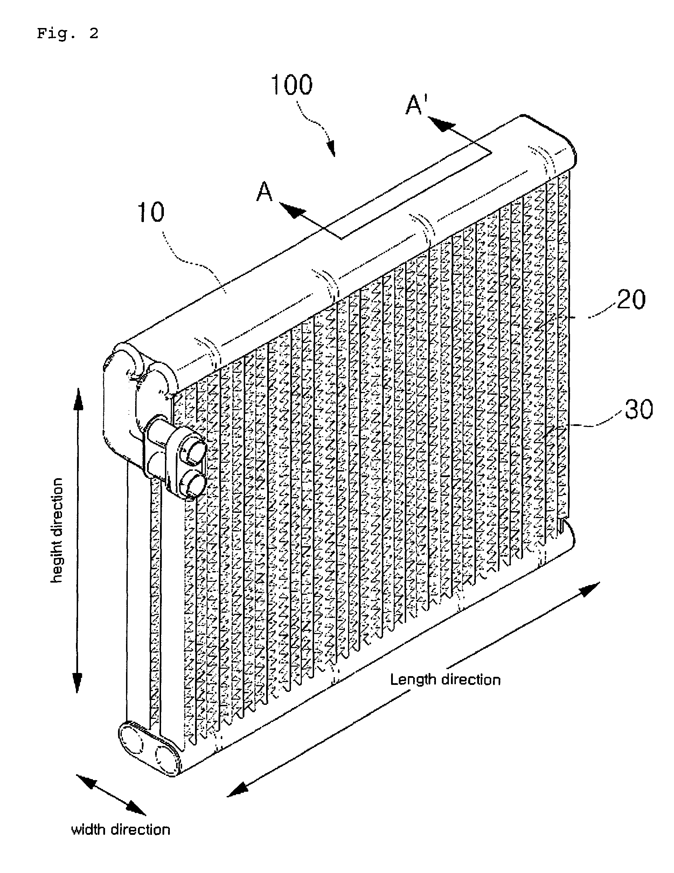

Fig. 2 is a perspective view of a general tube-fin type evaporator. The general tube-fin type evaporator includes a plurality of tubes 20 which are arranged in parallel along an air-blowing direction to be spaced apart from each other at regular intervals; a fin 30 which is interposed between the tubes 20 so as to increase a heat exchange surface area with respect to air flowing between the tubes 20; and a pair of header-tanks 10 which are coupled to both ends of the tube 20 so that a heat exchange medium is flowed therethrough.

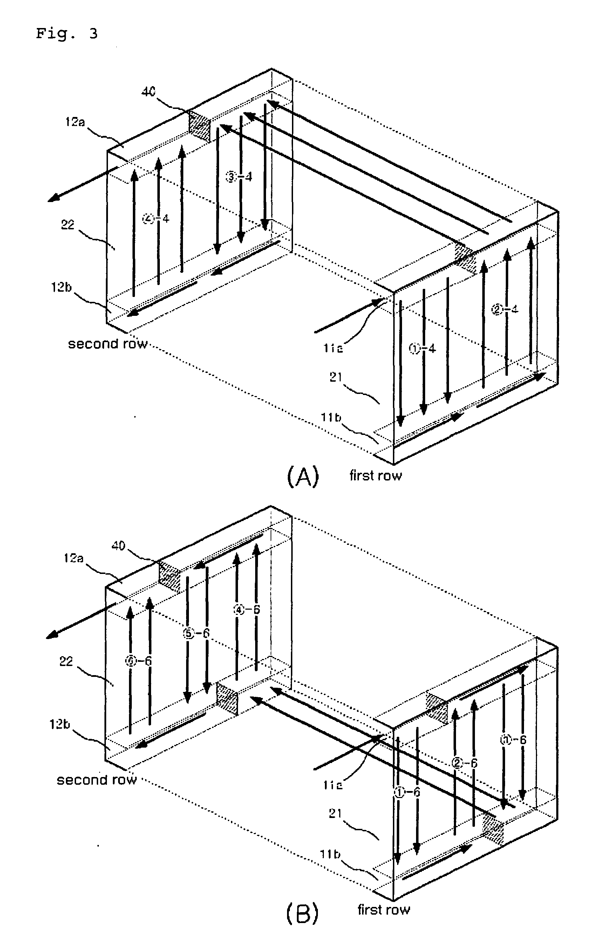

Generally, in the tube-fin type evaporator, refrigerant flow is divided into four passes or six passes. Fig. 3A is a schematic view showing the refrigerant flow divided into four passes in the tube-fin type evaporator, and Fig. 3B is a schematic view showing the refrigerant flow divided into six passes in the tube-fin type evaporator. As shown in Fig. 2, the tube-fin type evaporator is typically comprised of two rows. In Fig. 3, the rows of the evaporator are separated from each other, and the tank and tube portions are schematically illustrated in order to clearly show the refrigerant flow. As shown in Fig. 3A, in case of the four passes, two refrigerant flows per each row are formed in different directions from each other, and thus four refrigerant flows are formed totally. And as shown in Fig. 3B, in case of the six passes, three refrigerant flows per each row are formed in different directions from each other, and thus six refrigerant flows are formed totally. In order to change the refrigerant flows, as schematically shown in Fig. 3, a baffle 40 is disposed at a proper place of the tank. That is, in the four pass evaporator, first to fourth tube groups ①-4 to ④-4 are formed in a status that the baffle provided at the upper and lower tanks of the first and second rows is interposed among them, and the heat exchange medium passes, in turn, through the first to fourth tube groups ①-4 to ④-4. In the six pass evaporator, first to sixth tube groups ①-6 to ⑥-6 are formed in a status that the baffle provided at the upper and lower tanks of the first and second rows are interposed among them, and the heat exchange medium passes, in turn, through the first to sixth tube groups ①-6 to ⑥-6.

Hereinafter, the embodiment of the refrigerant flow in the four pass evaporator shown in Fig. 3A will be described more fully. As shown in Fig. 3A, the refrigerant is introduced into the first row, and then discharged through the second row. An upper tank of the first row is designated by a reference numeral 11a, a lower tank of the first row is designated by 11b, an upper tank of the second row is designated by a reference numeral 12a, a lower tank of the second row is designated by 12b, a tube of the first row is designated by 21, and a tube of the second row is designated by 22. As shown in the drawing, one baffle 40 is provided at each tank. In the four pass evaporator, the refrigerant is introduced into the upper tank 11a of the first row and passed, in turn, through a front portion of the baffle 40 provided at the upper tank 11a of the first row, the first tube group ①-4 as a part of the tube 21 of the first row, the lower tank 11b of the first row, the second tube group ②-4 as a part of the tube 21 of the first row, and a rear portion of the baffle 40 provided at the upper tank 11a of the first row, thereby passing through the tanks and tube of the first row. And the refrigerant is flowed to the second row and passed, in turn, through a rear portion of the baffle 40 provided at the upper tank 12a of the second row, the third tube group ③-4 as a part of the tube 22 of the second row, the lower tank 12b of the second row, the fourth tube group ④-4 as a part of the tube 21 of the second row, and a front portion of the baffle 40 provided at the upper tank 12a of the second row, thereby passing through the tanks and tube of the second row. And the refrigerant is discharged from the upper tank 12a of the second row.

Hereinafter, the embodiment of the refrigerant flow in the six pass evaporator shown in Fig. 3B will be described more fully. As shown in Fig. 3B, the refrigerant is introduced into the first row, and then discharged through the second row. An upper tank of the first row is designated by a reference numeral 11a, a lower tank of the first row is designated by 11b, an upper tank of the second row is designated by a reference numeral 12a, a lower tank of the second row is designated by 12b, a tube of the first row is designated by 21, and a tube of the second row is designated by 22. As shown in the drawing, one baffle 40 is provided at each tank. In the six pass evaporator, the refrigerant is introduced into the upper tank 11a of the first row and passed, in turn, through a front portion of the baffle 40 provided at the upper tank 11a of the first row, the first tube group ①-6 as a part of the tube 21 of the first row, a front portion of the baffle 40 provided at the lower tank 11b of the first row, the second tube group ②-6 as a part of the tube 21 of the first row, a rear portion of the baffle 40 provided at the upper tank 11a of the first row, the third tube group ③-6 as a part of the tube 21 of the first row, and a rear portion of the baffle 40 provided at the lower tank 11b of the first row, thereby passing through the tanks and tube of the first row. And the refrigerant is flowed to the second row and passed, in turn, through a rear portion of the baffle 40 provided at the lower tank 12b of the second row, the fourth tube group ④-6 as a part of the tube 22 of the second row, a rear portion of the baffle 40 provided at the upper tank 12a of the second row, the fifth tube group ⑤-6 as a part of the tube 22 of the second row, a front portion of the baffle 40 provided at the lower tank 12b of the second row, the sixth tube group ⑥-6 as a part of the tube 22 of the second row, and a front portion of the baffle 40 provided at the upper tank 12a of the second row, thereby passing through the tanks and tube of the second row. And the refrigerant is discharged from the upper tank 12a of the second row.

Of course, all of the four pass or six pass evaporators does not always have the passage as described above. For example, the refrigerant may be introduced and discharged through the lower tank, and also the refrigerant flow may be partially modified from the embodiment of Fig. 3, if the passage is constructed so that the refrigerant flow is divided into four or six passes.

In cases of the four and six passes, even though the evaporators having the same refrigerant and the same size are used, heat exchange characteristics thereof become different from each other. Therefore, in order to optimize the characteristics such as a heat radiation performance and a pressure drop, it is necessary to know how many passes the refrigerant flow is divided into. The present invention intends to optimize the heat exchange performance in the tube-fin type evaporators as shown in Figs. 3A and 3B.

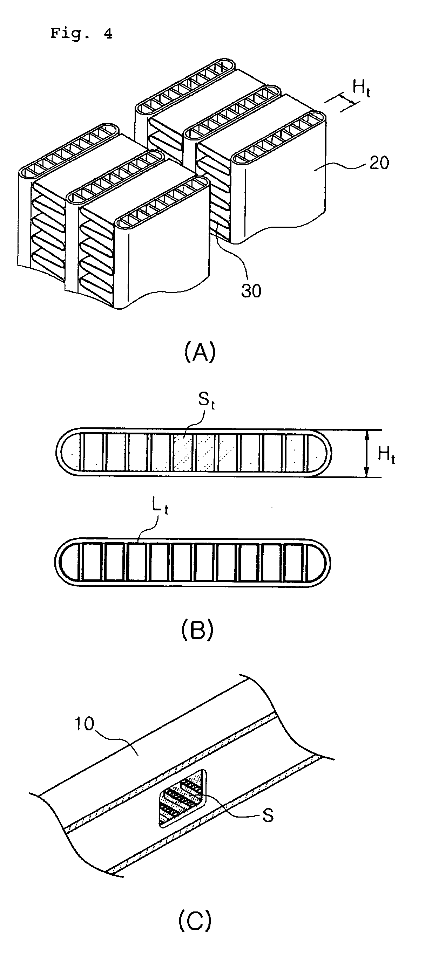

Fig. 4 is an enlarged view of each part of the tube-fin type evaporator, wherein Fig. 4A shows a part of an evaporator core having the tube 20 and the fin 30, Fig. 4B is a cross-sectional view of the tube 20 and Fig.4C is a cross-sectional view taken along a line A-A', i.e., taken by cutting a width direction center line of the header-tank 10. As shown in Fig. 4C, at the width direction center line of the header-tank 10, there is provided a partition wall which is extended in a length direction so as to partition an inside portion of the header-tank 10. The partition wall may be formed with a communication hole according to a design of the passage.

As shown in Figs. 4A and 4B, a height of the tube is Hₜ, and a sum of a surface area of each part which is formed in a cross section of the tube 20 and through which the heat exchange medium is passed, i.e., a surface area of the passage in the tube 20 is Sₜ. Further, a sum of a circumference of each part (i.e., a portion of the surface area of the passage) which is formed in a cross section of the tube 20 and through which the heat exchange medium is passed, i.e., a wetted length is Lₜ. A surface area of the communication hole shown in Fig. 4C is S. Herein, a hydraulic diameter Dₜ of the tube 20 is 4Sₜ/Lₜ. The tube used in the evaporator using conventional R-134a refrigerant is classified into an extrusion type, a folded type, a welded type and the like. These various types of tubes, such as the extrusion type, the folded type, the welded type, may be also applied in the evaporator using HFO 1234yf refrigerant.

There are various kinds of tests such as a test of a single part and a test of an air conditioning system. The test of a single part is to test its performance by circulating the refrigerant in a state that pressure of inlet and outlet ports of the evaporator is fixed, and the test of the air conditioning system is to test its performance using the air conditioning system installed in an actual vehicle while changing compressor RPM and a condition of intake air. Herein, even though a good test result for a single part is obtained, a test result for the air conditioning system is not always good. This is caused by that the test result may be affected by other conditions such as driving conditions.

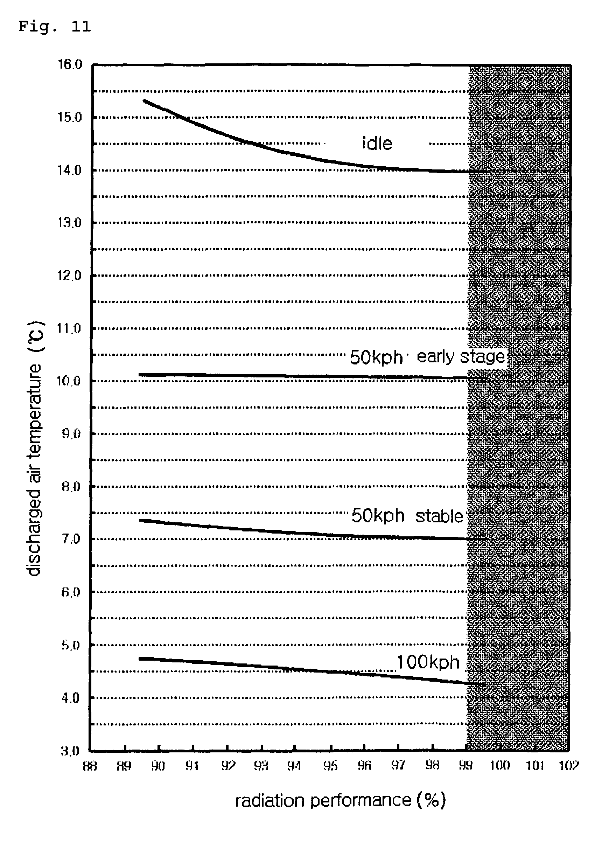

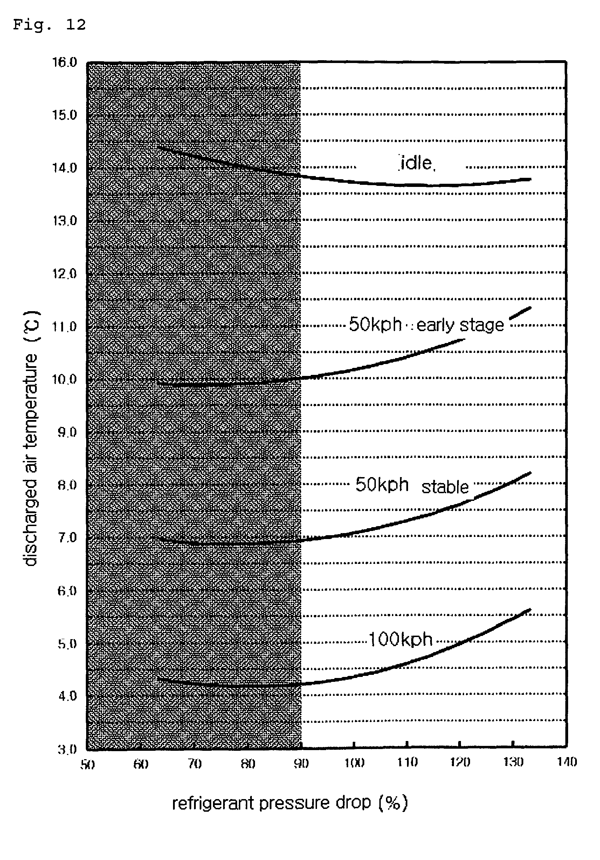

Fig. 11 is a relation graph of performance (temperature of discharged air) of an air conditioning system and heat radiation performance of a single part according to a kind of core for HFO 1234yf, and Fig. 12 is a relation graph of performance (temperature of discharged air) of an air conditioning system and a pressure drop of refrigerant of a single part according to a kind of core for HFO 1234yf. The graphs of Figs. 11 and 12 show the test result of a single part. The test result will be described fully below.

Fig. 11 shows a result of performing the test of a single part with respect to various kinds of cores for HFO 1234yf while changing the heat radiation. An x-axis of Fig. 11 is the heat radiation performance according to the various kinds of cores, and a y-axis is the temperature of the discharged air as a performance indicator of the air conditioning system. The lower the temperature of the discharged air is, the better it is. The result graph of Fig. 11 shows the temperature of the discharged air by vehicle speeds. As indicated in the graph, the heat radiation performance of the single part shows an optimal state at 99% or more, and the performance is deteriorated at 99% or less.

Fig. 12 shows a result of performing the test of a single part with respect to various kinds of cores for HFO 1234yf while changing the pressure drop of the refrigerant. An x-axis of Fig. 12 is the pressure drop of the refrigerant according to the various kinds of cores, and a y-axis is the temperature of the discharged air. As indicated in the graph of Fig. 12, the pressure drop of the refrigerant of the single part under the whole conditions except an idle state is sharply deteriorated at 90% or more.

In the present invention, assuming that the heat radiation performance and the pressure drop of the refrigerant in use of the core for R-134a with respect to the heat radiation performance and the pressure drop of the refrigerant in use of the core for HFO 1234yf, which shows optimal performance in the air conditioning system, is set to 100%, a range of the performance level thereof is calculated, and a range of the height of the tube, the hydraulic diameter and the FPDM(Fins Per DeciMeter) is decided to be corresponded to a percent value of such the heat radiation performance and the pressure drop of the refrigerant.

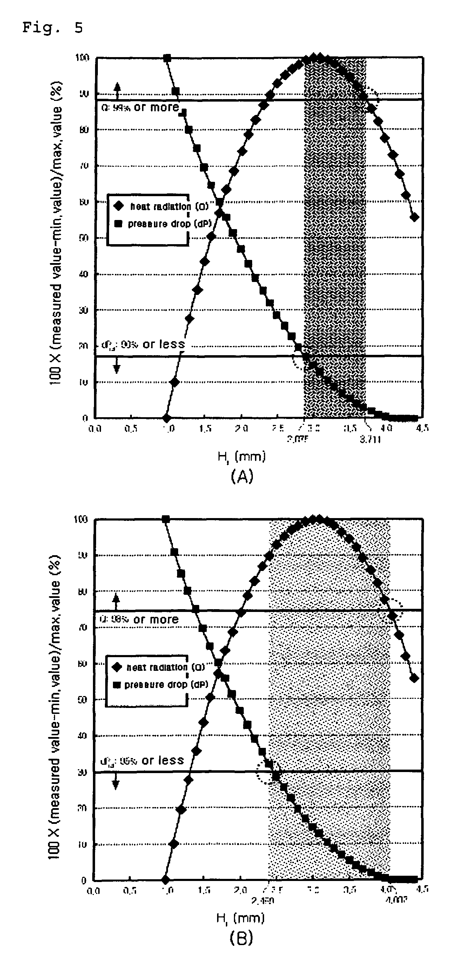

Hereinafter, an optimal design range of the four pass evaporator will be described, and the 'evaporator' in the description of Figs. 5 to 7 means the four pass evaporator.

In the present invention, a dimensional value of each design parameter of the evaporator using the HFO 1234yf refrigerant, which has a desired percentage (98~99% or more) of heat radiation performance, a desired percentage (90~95% or less) of refrigerant pressure drop and the same level (100%) of air pressure drop in contradistinction to the evaporator using the R-134a refrigerant, was optimized. The performance test was carried out using a combination of parts having a tube height Hₜ of 1.4~3.6mm, a hydraulic diameter Dₜ of 0.97~1.89mm, FPDM (the number of threads or grooves of the fin per 1decimeter, i.e., 10cm(1/10m)) of 60-84 and a surface area of the communication hole of 110~450mm², and thus the result graphs of Figs. 5 to 7 were obtained. Then, on the basis of the result graphs, the dimensional value of each design parameter was obtained so as to optimize the performance of the evaporator using the HFO 1234yf refrigerant. In the result graphs of Figs. 5 to 7, the heat radiation performance Q, the refrigerant pressure drop dP_{ref} and the air pressure drop dPₐᵢᵣ are indicated by a normalized maximum value of 100X(measured value - minimum value of measured values)/measured value.

Fig. 5 is a relation graph of the tube height Hₜ, and the heat radiation performance Q and the refrigerant pressure drop dP_{ref} in the four pass evaporator using the HFO 1234yf refrigerant. As shown in Fig. 5, the heat radiation performance Q and the refrigerant pressure drop dP_{ref} are considerably changed according to a change in the tube height Hₜ, but the air pressure drop dPₐᵢᵣ is hardly changed, and thus the air pressure drop dPₐᵢᵣ is not indicated in the drawing.

Fig. 5A shows a range in which the heat radiation performance Q is 99% or more, and the refrigerant pressure drop dP_{ref} is 90% or less in contradistinction to the evaporator using the R-134a refrigerant. As shown in the drawing, a maximum value of the tube height Hₜ is decided to 3.711mm by a restrictive condition of the heat radiation performance Q, and a minimum value of the tube height Hₜ is decided to 2.875mm by a restrictive condition of the refrigerant pressure drop dP_{ref}.

Fig. 5B shows a range in which the heat radiation performance Q is 98% or more, and the refrigerant pressure drop dP_{ref} is 95% or less in contradistinction to the evaporator using the R-134a refrigerant. As shown in the drawing, a maximum value of the tube height Hₜ is decided to 4.082mm by the restrictive condition of the heat radiation performance Q, and a minimum value of the tube height Hₜ is decided to 2.489mm by the restrictive condition of the refrigerant pressure drop dP_{ref}.

Preferably, the tube height Hₜ of the evaporator using the HFO 1234yf refrigerant has a value of 2.489~4.082mm (the heat radiation performance Q of 98% or more and the refrigerant pressure drop dP_{ref} of 95% or less), more preferably, 2.875~3.711mm (the heat radiation performance Q of 99% or more and the refrigerant pressure drop dP_{ref} of 90% or less).

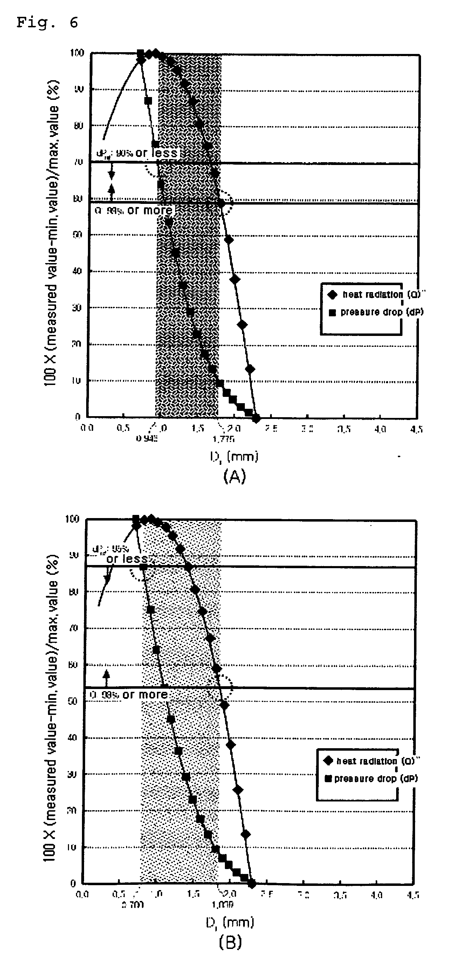

Fig. 6 is a relation graph of the hydraulic diameter Dₜ, and the heat radiation performance Q and the refrigerant pressure drop dP_{ref}. As shown in Fig. 6, the heat radiation performance Q and the refrigerant pressure drop dP_{ref} are considerably changed according to a change in the hydraulic diameter Dₜ, but the air pressure drop dPₐᵢᵣ is hardly changed, and thus the air pressure drop dPₐᵢᵣ is not indicated in the drawing.

Fig. 6A shows a range in which the heat radiation performance Q is 99% or more, and the refrigerant pressure drop dP_{ref} is 90% or less in contradistinction to the evaporator using the R-134a refrigerant. As shown in the drawing, a maximum value of the hydraulic diameter Dₜ is decided to 1.775mm by the restrictive condition of the heat radiation performance Q, and a minimum value of the hydraulic diameter Dₜ is decided to 0.946mm by the restrictive condition of the refrigerant pressure drop dP_{ref}.

Fig. 6B shows a range in which the heat radiation performance Q is 98 or more, and the refrigerant pressure drop dP_{ref} is 95% or less in contradistinction to the evaporator using the R-134a refrigerant. As shown in the drawing, a maximum value of the hydraulic diameter Dₜ is decided to 1.839mm by a restrictive condition of the heat radiation performance Q, and a minimum value of the hydraulic diameter Dₜ is decided to 0.780mm by a restrictive condition of the refrigerant pressure drop dP_{ref}.

Preferably, the hydraulic diameter Dₜ of the evaporator using the HFO 1234yf refrigerant has a value of 0.780~1.839mm (the heat radiation performance Q of 98% or more and the refrigerant pressure drop dP_{ref} of 95% or less), more preferably, 0.946~1.775mm (the heat radiation performance Q of 99% or more and the refrigerant pressure drop dP_{ref} of 90% or less).

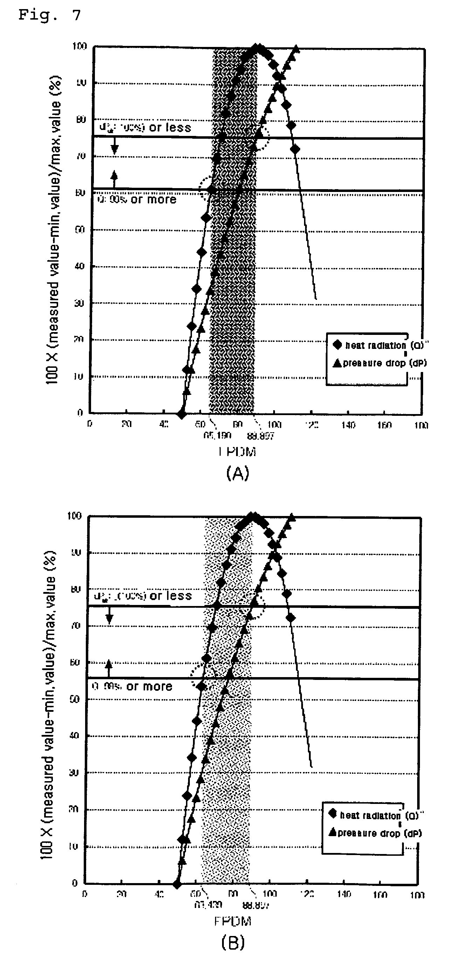

Fig. 7 is a relation graph of the FPDM, and the heat radiation performance Q and the air pressure drop dPₐᵢᵣ in the four pass evaporator using the HFO 1234yf refrigerant. As shown in Fig. 7, the heat radiation performance Q and the air pressure drop dPₐᵢᵣ are considerably changed according to a change in the FPDM, but the refrigerant pressure drop dP_{ref} is hardly changed, and thus the refrigerant pressure drop dP_{ref} is not indicated in the drawing.

Fig. 7A shows a range in which the heat radiation performance Q is 99% or more, and the air pressure drop dPₐᵢᵣ is the same level, i.e., 100% or less in contradistinction to the evaporator using the R-134a refrigerant. As shown in the drawing, a maximum value of the FPDM is decided to 88.897 by a restrictive condition of the air pressure drop dPₐᵢᵣ, and a minimum value of the FPDM is decided to 65.190 by a restrictive condition of the heat radiation performance Q.

Fig. 7B shows a range in which the heat radiation performance Q is 98% or more, and the air pressure drop dPₐᵢᵣ is the same level, i.e., 100% or less in contradistinction to the evaporator using the R-134a refrigerant. As shown in the drawing, a maximum value of the FPDM is decided to 88.897 by a restrictive condition of the air pressure drop dPₐᵢᵣ, and a minimum value of the FPDM is decided to 63.439 by a restrictive condition of the heat radiation performance Q.

Preferably, the FPDM of the evaporator using the HFO 1234yf refrigerant has a value of 63.439-88.897 (the heat radiation performance Q of 98% or more and the air pressure drop dPₐᵢᵣ of 100% or less), more preferably, 65.190-88.897 (the heat radiation performance Q of 99% or more and the air pressure drop dPₐᵢᵣ of 100% or less).

Briefly, it is preferable that the dimensional range of each design parameter of the four pass evaporator using the HFO 1234yf refrigerant is decided to Table 1 as follows:

**Table 1**

| | - heat radiation performance of 98% or more | - heat radiation performance of 99% or more |
|---|---|---|
| | - refrigerant pressure drop dP_{ref} of 95% or less | - refrigerant pressure drop dP_{ref} of 90% or less |
| | - air pressure drop dPₐᵢᵣ of 100% or less | - air pressure drop dPₐᵢᵣ of 100% or less |
| Tube height (Hₜ, mm) | 2.489-4.082 | 2.875-3.711 |
| Hydraulic diameter (Dₜ, mm) | 0.780-1.839 | 0.946-1.775 |
| FPDM | 63.439-88.897 | 65.190-88.897 |

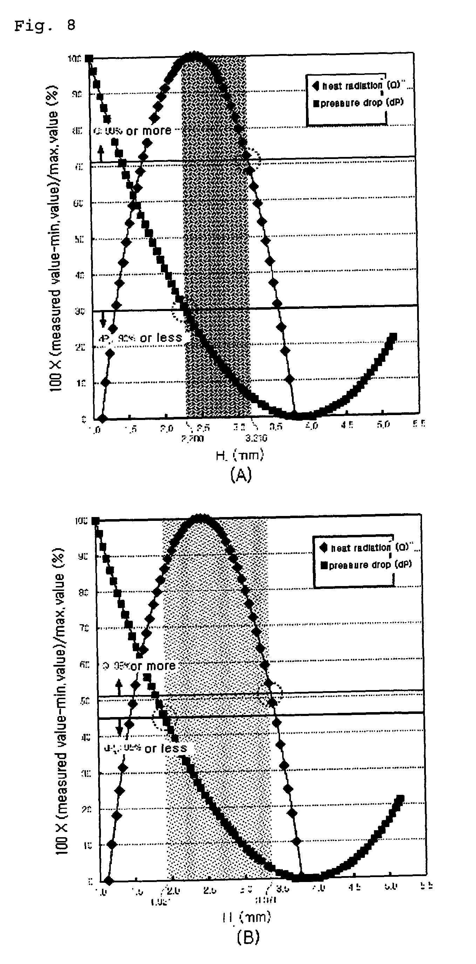

Hereinafter, an optimal design range of the six pass evaporator will be described, and the 'evaporator' in the description of Figs. 8 to 10 means the six pass evaporator.

In the present invention, a dimensional value of each design parameter of the evaporator using the HFO 1234yf refrigerant, which has a desired percentage (98~99% or more) of heat radiation performance, a desired percentage (90~95% or less) of refrigerant pressure drop and the same level (100%) of air pressure drop in contradistinction to the evaporator using the R-134a refrigerant, was optimized. The performance test was carried out using a combination of parts having a tube height Hₜ of 1.4~3.6mm, a hydraulic diameter Dₜ of 0.97~1.89mm, FPDM (the number of threads or grooves of the fin per 1decimeter, i.e., 10cm(1/10m)) of 60-84 and a surface area of the communication hole of 110~450mm², and thus the result graphs of Figs. 8 to 10 were obtained. Then, on the basis of the result graphs, the dimensional value of each design parameter was obtained so as to optimize the performance of the evaporator using the HFO 1234yf refrigerant. In the result graphs of Figs. 8 to 10, the heat radiation performance Q, the refrigerant pressure drop dP_{ref} and the air pressure drop dPₐᵢᵣ are indicated by a normalized maximum value of 100X(measured value-minimum value of measured values)/measured value.

Fig. 8 is a relation graph of the tube height Hₜ, and the heat radiation performance Q and the refrigerant pressure drop in a six pass evaporator. As shown in Fig. 8, the heat radiation performance Q and the refrigerant pressure drop dP_{ref} are considerably changed according to a change in the tube height Hₜ, but the air pressure drop dPₐᵢᵣ is hardly changed, and thus the air pressure drop dPₐᵢᵣ is not indicated in the drawing.

Fig. 8A shows a range in which the heat radiation performance Q is 99% or more, and the refrigerant pressure drop dP_{ref} is 90% or less in contradistinction to the evaporator using the R-134a refrigerant. As shown in the drawing, a maximum value of the tube height Hₜ is decided to 3.216mm by a restrictive condition of the heat radiation performance Q, and a minimum value of the tube height Hₜ is decided to 2.280mm by a restrictive condition of the refrigerant pressure drop dP_{ref} .

Fig. 8B shows a range in which the heat radiation performance Q is 98% or more, and the refrigerant pressure drop dP_{ref} is 95% or less in contradistinction to the evaporator using the R-134a refrigerant. As shown in the drawing, a maximum value of the tube height Hₜ is decided to 3.371mm by the restrictive condition of the heat radiation performance Q, and a minimum value of the tube height Hₜ is decided to 1.921mm by the restrictive condition of the refrigerant pressure drop dP_{ref}.

Preferably, the tube height Hₜ of the evaporator using the HFO 1234yf refrigerant has a value of 1.921~3.371mm (the heat radiation performance Q of 98% or more and the refrigerant pressure drop dP_{ref} of 95% or less), more preferably, 2.280~3.216mm (the heat radiation performance Q of 99% or more and the refrigerant pressure drop dP_{ref} of 90% or less).

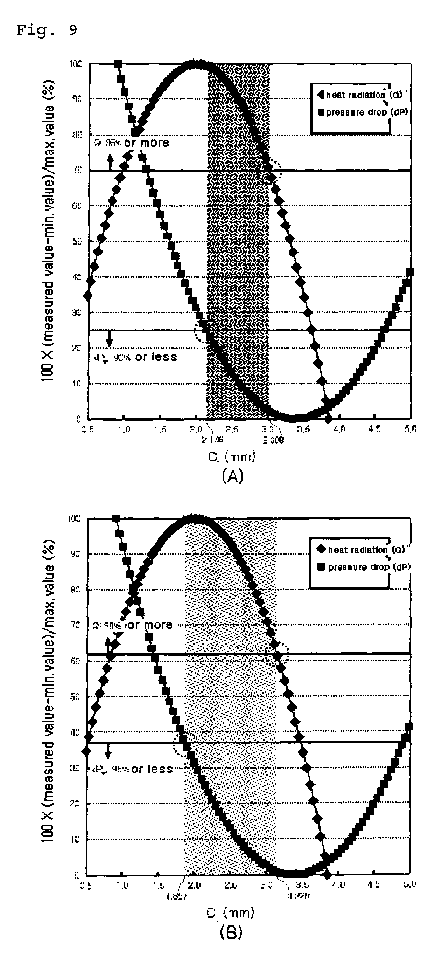

Fig. 9 is a relation graph of the hydraulic diameter Dₜ, and the heat radiation performance and refrigerant pressure drop in the six pass evaporator. As shown in Fig. 9, the heat radiation performance Q and the refrigerant pressure drop dP_{ref} are considerably changed according to a change in the hydraulic diameter Dₜ, but the air pressure drop dPₐᵢᵣ is hardly changed, and thus the air pressure drop dPₐᵢᵣ is not indicated in the drawing.

Fig. 9A shows a range in which the heat radiation performance Q is 99% or more, and the refrigerant pressure drop dP_{ref} is 90% or less in contradistinction to the evaporator using the R-134a refrigerant. As shown in the drawing, a maximum value of the hydraulic diameter Dₜ is decided to 3.008mm by the restrictive condition of the heat radiation performance Q, and a minimum value of the hydraulic diameter Dₜ is decided to 2.146mm by the restrictive condition of the refrigerant pressure drop dP_{ref}.

Fig. 9B shows a range in which the heat radiation performance Q is 98% or more, and the refrigerant pressure drop dP_{ref} is 95% or less in contradistinction to the evaporator using the R-134a refrigerant. As shown in the drawing, a maximum value of the hydraulic diameter Dₜ is decided to 3.228mm by a restrictive condition of the heat radiation performance Q, and a minimum value of the hydraulic diameter Dₜ is decided to 1.857mm by a restrictive condition of the refrigerant pressure drop dP_{ref}.

Preferably, the hydraulic diameter Dₜ of the evaporator using the HFO 1234yf refrigerant has a value of 1.857~3.228mm (the heat radiation performance Q of 98% or more and the refrigerant pressure drop dP_{ref} of 95% or less), more preferably, 2.146~3.008mm (the heat radiation performance Q of 99% or more and the refrigerant pressure drop dP_{ref} of 90% or less).

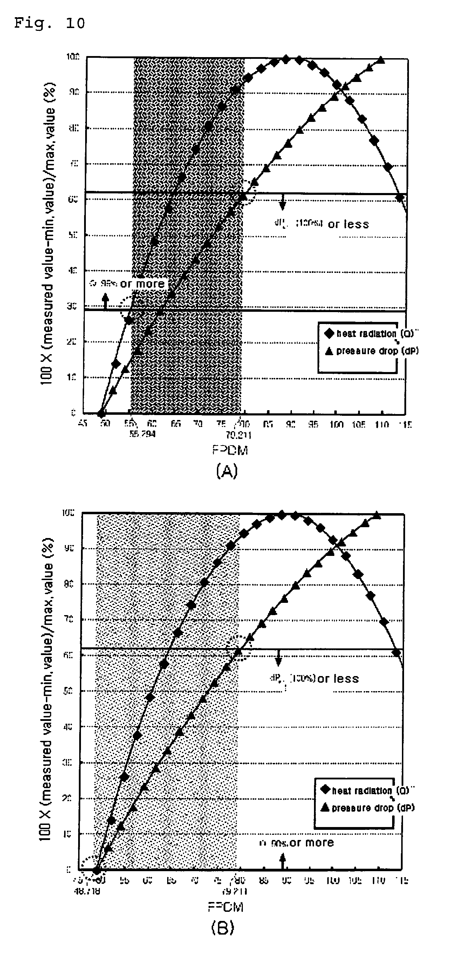

Fig. 10 is a relation graph of the FPDM, and the heat radiation performance Q and the air pressure drop dPₐᵢᵣ in the six pass evaporator using the HFO 1234yf refrigerant. As shown in Fig. 10, the heat radiation performance Q and the air pressure drop dPₐᵢᵣ are considerably changed according to a change in the FPDM, but the refrigerant pressure drop dP_{ref} is hardly changed, and thus the refrigerant pressure drop dP_{ref} is not indicated in the drawing.

Fig. 10A shows a range in which the heat radiation performance Q is 99% or more, and the air pressure drop dPₐᵢᵣ is the same level, i.e., 100% or less in contradistinction to the evaporator using the R-134a refrigerant. As shown in the drawing, a maximum value of the FPDM is decided to 79.211 by a restrictive condition of the air pressure drop dPₐᵢᵣ, and a minimum value of the FPDM is decided to 55.294 by a restrictive condition of the heat radiation performance Q.

Fig. 10B shows a range in which the heat radiation performance Q is 98% or more, and the air pressure drop dPₐᵢᵣ is the same level, i.e., 100% or less in contradistinction to the evaporator using the R-134a refrigerant. As shown in the drawing, a maximum value of the FPDM is decided to 79.211 by a restrictive condition of the air pressure drop dPₐᵢᵣ, and a minimum value of the FPDM is decided to 48.718 by a restrictive condition of the heat radiation performance Q.

Preferably, the FPDM of the evaporator using the HFO 1234yf refrigerant has a value of 48.718-79.211 (the heat radiation performance Q of 98% or more and the air pressure drop dPₐᵢᵣ of 100% or less), more preferably, 55.294-79.211 (the heat radiation performance Q of 99% or more and the air pressure drop dPₐᵢᵣ of 100% or less).

Briefly, it is preferable that the dimensional range of each design parameter of the six pass evaporator using the HFO 1234yf refrigerant is decided to Table 2 as follows:

**Table 2**

| | - heat radiation performance of 98% or more | - heat radiation performance of 99% or more |
|---|---|---|
| | - refrigerant pressure drop dP_{ref} of 95% or less | - refrigerant pressure drop dP_{ref} of 90% or less |
| | - air pressure drop dPₐᵢᵣ of 100% or less | - air pressure drop dPₐᵢᵣ of 100% or less |
| Tube height (Hₜ, mm) | 1.921-3.371 | 2.280-3.216 |
| Hydraulic diameter (Dₜ, mm) | 1.857-3.228 | 2.146-3.008 |
| FPDM | 48.718-79.211 | 55.294-79.211 |

In the air conditioning system with the tube-fin type evaporator using the HFO 1234yf refrigerant according to the present invention, it is possible to solve the problem in an evaporator having the conventional design due to the totally different physical properties from conventional refrigerant containing R-134a, CO₂ or the like, thereby optimizing the performance of the evaporator, i.e., the heat rejection and the pressure drop. In other words, according to the present invention, it is possible to obtain the equal performance with the conventional evaporator, even though using the HFO 1234yf refrigerant.

Further, according to the present invention, since is possible to maintain the equal performance with the conventional evaporator using the conventional R-134a refrigerant, even though using the environment friendly refrigerant, it is possible to secure the evaporator performance and also obtain the excellent environment friendly characteristic. Furthermore, in order to overcome the problem of performance deterioration of the system using the HFO 1234yf refrigerant, compared with the system using the R-134a refrigerant, it may be necessary to change the whole design of the system and this causes an increase in cost. However, according to the present invention, it is possible to provide the system using the 1234yf refrigerant, which has the equal performance with the conventional system using the R-134a refrigerant, by changing only a range of design dimension of the evaporator, thereby solving the problem of the increase in cost.

While the present invention has been described with respect to the specific embodiments, it will be apparent to those skilled in the art that various changes and modifications may be made without departing from the spirit and scope of the invention as defined in the following claims.

## Claims

1. An air conditioning system with a tube-fin type evaporator using HFO 1234yf refrigerant, comprising:
a compressor;
a condenser; and
an expansion valve,
wherein the tube-fin type evaporator comprises a plurality of tubes which are arranged in parallel along an air-blowing direction to be spaced apart from each other at regular intervals; a fin which is interposed between the tubes so as to increase a heat exchange surface area with respect to air flowing between the tubes; a pair of header-tanks which are coupled to both ends of the tube so that a heat exchange medium is flowed therethrough; and at least one or more baffle which are provided at the header-tank, and
the heat exchange medium is refrigerant containing HFO 1234yf, the tube has a height of 2.489~4.082mm, and a flow of the heat exchange medium is divided into four passes.

2. The air conditioning system of claim 1, wherein the tube has a height of 2.875~3.711mm.

3. An air conditioning system with a tube-fin type evaporator using HFO 1234yf refrigerant, comprising:
a compressor;
a condenser; and
an expansion valve,
wherein the tube-fin type evaporator comprises a plurality of tubes which are arranged in parallel along an air-blowing direction to be spaced apart from each other at regular intervals; a fin which is interposed between the tubes so as to increase a heat exchange surface area with respect to air flowing between the tubes; a pair of header-tanks which are coupled to both ends of the tube so that a heat exchange medium is flowed therethrough; and at least one or more baffle which are provided at the header-tank, and
the heat exchange medium is refrigerant containing HFO 1234yf, the tube has a hydraulic diameter of 0.780~1.839mm, and a flow of the heat exchange medium is divided into four passes.

4. The air conditioning system of claim 3, wherein the tube has a hydraulic diameter of 0.946~1.775mm.

5. An air conditioning system with a tube-fin type evaporator using HFO 1234yf refrigerant, comprising:
a compressor;
a condenser; and
an expansion valve,
wherein the tube-fin type evaporator comprises a plurality of tubes which are arranged in parallel along an air-blowing direction to be spaced apart from each other at regular intervals; a fin which is interposed between the tubes so as to increase a heat exchange surface area with respect to air flowing between the tubes; a pair of header-tanks which are coupled to both ends of the tube so that a heat exchange medium is flowed therethrough; and at least one or more baffle which are provided at the header-tank, and
the heat exchange medium is refrigerant containing HFO 1234yf, FPDM indicating the number of fins per decimeter has a value of 63.439-88.897, and a flow of the heat exchange medium is divided into four passes.

6. The air conditioning system of claim 5, wherein the FPDM has a value of 65.190-88.897.

7. The air conditioning system of claim 1, wherein the evaporator 100 is provided with first to fourth tube groups which are formed in a status that the baffle provided at upper and lower tanks of first and second rows is interposed among them, and the heat exchange medium passes, in turn, through the first to fourth tube groups.

8. An air conditioning system with a tube-fin type evaporator using HFO 1234yf refrigerant, comprising:
a compressor;
a condenser; and
an expansion valve,
wherein the tube-fin type evaporator comprises a plurality of tubes which are arranged in parallel along an air-blowing direction to be spaced apart from each other at regular intervals; a fin which is interposed between the tubes so as to increase a heat exchange surface area with respect to air flowing between the tubes; a pair of header-tanks which are coupled to both ends of the tube so that a heat exchange medium is flowed therethrough; and at least one or more baffle which are provided at the header-tank, and
the heat exchange medium is refrigerant containing HFO 1234yf, the tube has a height of 1.921~3.371mm, and a flow of the heat exchange medium is divided into six passes.

9. The air conditioning system of claim 1, wherein the tube has a height of 2.280~3.216mm.

10. An air conditioning system with a tube-fin type evaporator using HFO 1234yf refrigerant, comprising:
a compressor;
a condenser; and
an expansion valve,
wherein the tube-fin type evaporator comprises a plurality of tubes which are arranged in parallel along an air-blowing direction to be spaced apart from each other at regular intervals; a fin which is interposed between the tubes so as to increase a heat exchange surface area with respect to air flowing between the tubes; a pair of header-tanks which are coupled to both ends of the tube so that a heat exchange medium is flowed therethrough; and at least one or more baffle which are provided at the header-tank, and
the heat exchange medium is refrigerant containing HFO 1234yf, the tube has a hydraulic diameter of 1.857~3.228mm, and a flow of the heat exchange medium is divided into six passes.

11. The air conditioning system of claim 1, wherein the tube has a hydraulic diameter of 2.146~3.008mm.

12. An air conditioning system with a tube-fin type evaporator using HFO 1234yf refrigerant, comprising:
a compressor;
a condenser; and
an expansion valve,
wherein the tube-fin type evaporator comprises a plurality of tubes which are arranged in parallel along an air-blowing direction to be spaced apart from each other at regular intervals; a fin which is interposed between the tubes so as to increase a heat exchange surface area with respect to air flowing between the tubes; a pair of header-tanks which are coupled to both ends of the tube so that a heat exchange medium is flowed therethrough; and at least one or more baffle which are provided at the header-tank, and
the heat exchange medium is refrigerant containing HFO 1234yf, FPDM indicating the number of fins per decimeter has a value of 48.718-79.211, and a flow of the heat exchange medium is divided into six passes.

13. The air conditioning system of claim 1, wherein the FPDM has a value of 55.294~79.211.

14. The air conditioning system of claim 1, wherein the evaporator 100 is provided with first to sixth tube groups which are formed in a status that the baffle provided at upper and lower tanks of first and second rows is interposed among them, and the heat exchange medium passes, in turn, through the first to sixth tube groups.
